Europäisches Patentamt

European Patent Office

Office européen des brevets

(11) Publication number: **0 041 316**
**B1**

(12) **EUROPEAN PATENT SPECIFICATION**

(45) Date of publication of patent specification: **20.02.85**

(21) Application number: **81301802.5**

(22) Date of filing: **23.04.81**

(51) Int. Cl.⁴: **C 08 B 31/00, C 08 B 30/12**

(54) **Method of modifying starch.**

(30) Priority: **25.04.80 GB 8013830**

(43) Date of publication of application:
**09.12.81 Bulletin 81/49**

(45) Publication of the grant of the patent:
**20.02.85 Bulletin 85/08**

(84) Designated Contracting States:
**AT BE DE FR IT NL SE**

(56) References cited:
**DE-A-2 934 464**
**GB-A-1 425 624**

**CHEMICAL ABSTRACTS, vol. 81, no. 20
November 18, 1974, page 175, abstract no.
123344v COLUMBUS, Ohio (US)**

(73) Proprietor: **CPC INTERNATIONAL INC.
International Plaza P.O. Box 8000
Englewood Cliffs New Jersey 07632 (US)**
㊅ **BE DE IT NL SE AT**
(73) Proprietor: **Société des Produits du Mais
379, Avenue du Général de Gaulle
F-92142 Clamart B.P. Cedex 10-75300 Paris (FR)**
㊅ **FR**

(72) Inventor: **Marquette, Georges Henri Albert
Soc. des Produits du Mais Rue du Michel Joffre
F-59320 Haubourdin (FR)**

(74) Representative: **Pennant, Pyers et al
Stevens, Hewlett & Perkins 5 Quality Court
Chancery Lane
London, WC2A 1HZ (GB)**

Courier Press, Leamington Spa, England.

## Description

This invention relates to a method of modifying starch which involves the use of UHF (Ultra high frequency) radiation.

It is known to subject starch to UHF radiation for the purpose of heating and/or drying. The present invention involves subjecting a mixture of starch with another reagent to UHF radiation under conditions to effect chemical modification of the starch.

British Patent Specification 1,425,624 describes a process for chemically modifying starch which comprises subjecting a mixture of starch and a modifying agent to microwave energy under conditions that the water content during the treatment is or reduces to less than 10% by weight of the starch. It is stated that if starch with a moisture content above 10% is subjected to microwave energy without evaporation of water hardly any conversion takes place and unstable or strongly coloured products are obtained. The process described and exemplified involves the use of fluidised bed conditions at temperatures above 110°C.

Our investigations indicate that this procedure has several disadvantages. At temperatures above 100°C, the bulk of the microwave energy goes in evaporating water, which is not particularly desired, instead of performing the desired chemical modification. As the object of the treatment is chemical modification of starch, energy space heating the reactants is not directly useful, and a process which did not involve heating to above 110°C would be preferred. Starch tends to degrade if maintained for long periods above 110°C. Starch at high temperature and low moisture content is a fire hazard; is liable to char, and when cooled for bagging tends to absorb atmospheric moisture and cake instead of remaining as a free flowing powder.

It is an object of this invention to reduce or avoid these disadvantages. The invention results from our observations that, in contrast to the statements in the aforesaid British Patent Specification, chemical modification of starch can be effected under the influence of UHF radiation at moisture contents above 10% by weight.

The present invention provides a method of chemically modifying starch, which method comprises providing a mixture of starch with at least one reagent which reacts chemically with starch, and subjecting the mixture to UHF radiation so as to effect chemical modification of the starch, the mixture before and after the treatment having a moisture content greater than 10% by weight and the UHF radiation treatment being effected at temperatures below 100°C.

The method of the invention may be divided into two categories, depending on the initial moisture in the starch:—

a) *The semi-dry method.* In this, the starting mixture contains from above 10% to 35%, usually 15% to 25%, particularly 17% to 19% in the case of corn starch, of moisture by weight. The starch is essentially granular, i.e. not gelatinised, at the start of the treatment, and UHF radiation conditions are used which do not cause gelatinisation. To this end, the temperature of the mixture is kept below 100°C, preferably below 80°C. For a given time of treatment, mixtures with a higher moisture content must be restricted to a lower temperature to avoid risk of gelatinisation.

The content of recoverable moisture in the mixture falls during treatment, partly as a result of evaporation, and partly because some water becomes involved in chemical modification or degradation of the starch, but preferably does not fall below 12% by weight. For a mixture with a starting moisture content of 17% to 19%, the moisture content after treatment is typically 13% to 16%.

b) *The wet method.* In this, the starting mixture contains more than 35% of moisture, and is generally in the form of an aqueous slurry. Where granular starch is used it will be desired not to gelatinise the starch, in which case treatment temperatures must be kept rather low, e.g. below 60°C and preferably below 50°C. Where pregelatinised starch is used, such temperature limitations do not apply, and it will generally be preferred that the slurry reach a maximum temperature in the range 50°C to 100°C in order to perform the desired chemical modification quickly and efficiently.

The nature of the starch used is not critical. Suitable starches include corn starch, potato starch, wheat starch, tapioca starch, rice starch, sorghum starch, waxy corn starch and waxy sorghum starch. The starch may be in admixture with other materials, for example in the form of flour. The starting starch may optionally have been already chemically or physically modified or degraded.

Suitable reagents for chemically modifying starch according to the invention are well known. Examples are reagents which effect etherification, esterification, hydrolysis, cross-linking, oxidation, and dextrinisation, as described in Radley "Starch and its Derivatives", 1968 Chapman and Hall Ltd., Chapters 11 and 12; and Whistler/Pascall "Starch: Chemistry and Technology" Academic Press, Volume I (1965) Chapters 18 and 19, and Volume II (1967) Chapters 9, 10, 11, 13, 14, 15, 16, 17 and 19. It is also possible to prepare starch copolymers and starch graft polymers, for example with products from the classes polyvinyl alcohols, acrylamides and monomers and polymers derived from petroleum.

The amount of the reagent used depends on the degree of substitution required, it being borne in mind that the reaction is unlikely to be 100% efficient and may be as low as 50% efficient. The semi-dry method can be used to achieve any desired degree of substitution, whether high or low, the proportion of reagent and the radiation conditions being chosen accordingly. The wet method is suitable to achieve low degrees of substitution up to about 0.05 moles/mole without risk of gelatinising the starch. When the starch is gelatinised before being subjected to radiation, higher degrees of substitution may be obtained.

UHF radiation has a frequency in the range 300 MHz to 300000 MHz. Within this range, only certain specific bands are permitted for industrial use in many countries, and these include 915, 2450, 5800 and 22155 MHz. It is preferred to use a frequency, about 2450 MHz, which corresponds to the activation of the dipole H—OH of the starch chain. It is believed that this activation results in the orientation of the dipole in the alternating radiation field, and that the oscillation which results breaks labile bonds whose presence makes the crystalline regions of starch granules so difficult to attack.

The time for which it is necessary to subject the mixture to UHF radiation in order to achieve the desired degree of chemical modification depends on the power available and on the temperature to which it is permitted to heat the mixture. Typically, treatment will be complete within 5 minutes and often within one minute.

The nature of the equipment used to effect the radiation treatment is not critical. Conveniently such equipment may comprise a tunnel whose cavity forms a wave guide for the UHF radiation and whose dimensions may determine the frequency of the radiation. (Such equipment is offered by IMI under the Trade Mark Gigatron.) The mixture may be continuously passed through the tunnel, on a conveyor belt if it is solid, along a pipe or trough if it is in slurry form. A treated slurry may be flash dried or used in its liquid state. A treated particulate solid may be dispensed into bags for delivery; alternatively, the starting mixture may be dispensed into bags of a material transparent to UHF radiation, and the bags and their contents subjected to the UHF radiation; such prepacking is only possible however when temperature of the mixture during treatment does not reach a value which could rupture or damage the bags, i.e. preferably remains below 100°C.

The invention will be further described with reference to the accompanying drawings, in which:-

Figure 1 is a schematic view of equipment for performing the methods in the semi-dry way;

Figure 2 is a schematic view of equipment for performing the invention in the wet way;

Like reference numerals denote like parts.

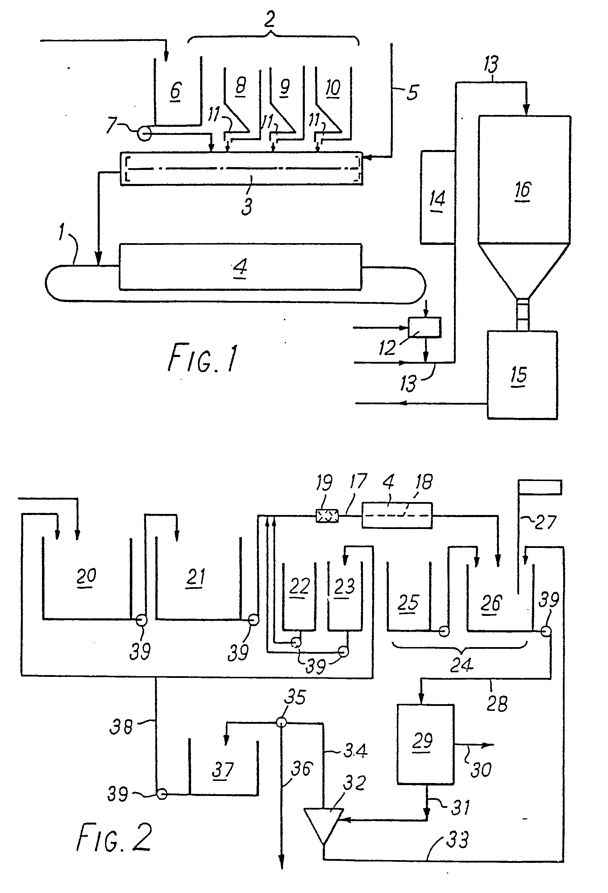

Referring to Figure 1, an installation according to the invention includes a conveyer belt 1 constituting the means of circulation of the product to be treated, preferably made of a material which is flexible and stable at high temperature such as polytetrafluoroethylene, passing on the one hand past the feeding stations generally designated 2 which can themselves be connected to a blender collector 3 and on the other hand, through the interior of a tunnel 4 forming a cavity used as a wave guide for UHF radiation.

In the case of treatment in the semi-dry way, the blender 3 of a mechanical or pneumatic type is fed by the constituents of the reactions envisaged contained in their respective vessels or containers: the base starch is introduced by a conduit 5 directly to the blender 3; a first tank 6 contains a reagent in solution such as sodium monochloroacetate, epoxypropyltrimethylammonium chloride, acetic anhydride, hydrochloric acid, sodium hypochlorite, propylene oxide, or trisodium phosphate. The tank 6 is preferably equipped with an agitator and leads to the blender 3 via a dosing pump 7. A series of other tanks 8, 9, 10, preferably in the form of troughs equipped with transporting screws 11 at their lower ends containing for example a powdered catalyst such as lime (8), sodium carbonate (9), sodium hydroxide (10), or sodium phosphate, chosen for the chemical treatment envisaged. The dry starch introduced by the conduit 5 contains of course a certain amount of natural moisture, for example 12% for corn starch and 20% for potato starch. Optionally, water can be added to the blender, in order to obtain a convenient amount of moisture in the mixture, that is to say 15% to 20% for a semi-dry way; the introduction of a conventional anti-lumping agent is also envisaged.

Of course the conveyor belt 1 is associated with equipment, for example a rake, known per se, to spread evenly the mass being transported.

Downstream of the tunnel 1, the above equipment may optionally be completed by a neutralisation station 12, a means of transporting the treated product, in the form for example of a pneumatic transporter 13, associated with a cooling station 14 if desired, and a bagging station 15 fed through a hopper 16 which can be for example a storage silo.

The installation described above can be modified in several ways dictated by essentially practical considerations; for example, the bagging station can be positioned immediately at the exit of the blender 3, the radiation acting accordingly directly on the bags, without this arrangement affecting the quality of the modified starches obtained.

For the treatment in the wet way, and referring to Figure 2, the tunnel 4 is traversed by a conduit 17 for circulation of the product being treated, which transports an adequate suspension of starch. The conduit 17 is connected, within tunnel 4, to a cell 18 which is permeable to the radiation, for example of glass, through which the suspension passes to be exposed. The device introducing the suspension into the tunnel 4 is preferably constituted by a constant flow pump or a static mixer 19.

The feeding devices upstream of tunnel 4 include a series of appropriate tanks, that is to say: for preparation of starch suspension 20 and optionally storage 21 of the suspension, feeding of the cationic reagents 22 such as those mentioned above and of the catalyst such as caustic soda 23. Downstream of the tunnel 4, the installation can be completed by a device 24 for adjusting the pH comprising a tank 25 to contain acid a neutralisation tank 26 and a pH measuring device 27.

The final suspension passing through the conduit 28 at the exit of tank 26 is subsequently brought to a centrifuge 29, which enables the modified starch to be recovered in the form of a cake of 35 to 38% moisture, connected on one hand to equipment 30 to pass the solid fraction to an appropriate dryer, for example a flash dryer, the liquid fraction passing by an exit conduit 31 from the centrifuge 29 which can feed a concentrator 32. The concentrated fraction leaving the concentrator 32 is recycled via a conduit 33 to the neutralization vessel 26 while the non-concentrated fraction which is transmitted by the conduit 34 and through a three-way valve 35, is sent either to a waste-water treatment station by a conduit 36, or is recycled in a loop comprising a storage vessel 37, feeding a tank 20 for preparation of starch suspension by a conduit 38 and a vessel 23 for catalyst solution.

In the installation described above, all the conduits include adequate circulation pumps 39.

The following Examples are presented to illustrate the invention.

### Example 1
### Preparation of Cationic Starch

A primary mixture is made as follows: 1000 kg of dry corn starch (containing 13% moisture), 150 kg of epoxypropyltrimethyl ammonium chloride (active form) in the form of a solution containing 70% of the active compound, 3 kg of colloidal silica, 3 kg of tricalcium phosphate, 28.9 kg of slaked lime and 33.12 kg of sodium carbonate. The mixture, with a moisture content of 18%, is then distributed on a conveyer belt (width 40 cm.), within a tunnel 2.5 metres long whose cavity forms a wave guide for UHF radiation of 30 kW power and 2450 MHz, to a depth of 30 mm, the speed of movement of the conveyer belt being 2 m/minute.

The starch thus treated by the UHF radiation leaves the device at a temperature of 88°C and a moisture content of 12% by weight. Its degree of cationic substitution is 0.15 moles/mole, which is a substitution yield of 90%. After neutralisation, its Scott viscosity 6 g. (at 12% moisture) is 45 seconds.

### Example 2
### Preparation of Carboxymethyl Starch

A primary mixture is made as follows: 1000 kg of dry corn starch having a moisture content of 13%, 375 kg of sodium monochloroacetate, 217 kg of slaked lime, 250 kg of sodium carbonate, 5 kg of colloidal silica. The moisture of the mixture is raised to 15% by means of a water spray. The mixture thus prepared is subjected to UHF radiation under the conditions of the previous example. The modified starch thus produced has an exit temperature of 85°C and, a moisture content of 12% by weight, and a degree of substitution of 0.43 moles/mole.

### Example 3
### Preparation of a Cationic Phosphate Starch

A primary mixture is made as follows: 1000 kg of dry corn starch having a moisture content of 12%, 41 kg of trimethylglycidylammonium chloride (active form) in the form of a solution containing 70% of the active substance, 20 kg of sodium tripolyphosphate, 23 kg of slaked lime, 26.5 kg of sodium carbonate. The thus prepared mixture is subjected to UHF radiation under the conditions of Example 1. During the treatment the moisture content falls from 18% to 13%. The modified starch thus produced leaves the device at a temperature of 85—95°C, its degree of cationic substitution is 0.034 moles/mole, the bound phosphorus content is 0.2%.

### Example 4
### Preparations of a Cationic Starch having a Low Degree of Substitution

In a corn starch slurry at 460 g/litre there is introduced in proportion to the dry substance used, epoxypropyltrimethylammonium chloride in solution containing 70% of active material, in an amount of 15 kg of active component per 1000 kg of dry corn starch, and caustic soda in 10% solution in an amount of 12 kg of caustic soda per 1000 kg of dry corn starch. The reaction mixture thus prepared is subjected to UHF radiation at 600 watts at a feeding speed 18 litres/hour which is 8.3 kg/hour of dry starch. The time for passage under the radiation is 20 seconds. The degree of cationic substitution measured on the starch after neutralisation, washing and drying is 0.016 moles/mole which is a yield of 90%. The temperature of the starch suspension at the exit of the equipment is 49°C which permits the starch to be extracted in a granular form directly from the aqueous suspension.

**Claims**

1. A method of chemically modifying starch, which method comprises providing a mixture of starch with at least one reagent which reacts chemically with starch, and subjecting the mixture having a moisture content greater than 10% by weight to UHF radiation so as to effect chemical modification of the starch, characterized in that the method is performed so that the mixture also after the treatment has a moisture content greater than 10% by weight and in that the UHF radiation treatment is effected at temperatures below 100°C.

2. A method as claimed in claim 1, wherein the starch used is in granular form, and the UHF radiation treatment is effected under conditions to avoid gelatinisation.

3. A method as claimed in claim 2, wherein the starch has a starting moisture content of up to 35% by weight.

4. A method as claimed in claim 2, wherein the starch has a starting moisture content of greater than 35% by weight.

5. A method as claimed in claim 1, wherein pre-gelatinised starch is used, at a starting moisture content of greater than 35% by weight.

6. A method as claimed in any one of claims 1 to 5, wherein the starch used is corn starch.

7. A method as claimed in any one of claims 1 to 6, wherein the reagent which reacts chemically with starch is an etherification, esterification, hydrolysis, cross-linking, oxidation or dextrinisation reagent.

8. A method as claimed in any one of claims 1 to 7, wherein the UHF radiation has a frequency of about 2450 MHz.

**Patentansprüche**

1. Verfahren zum Modifizieren von Stärke auf chemischem Weg, wobei ein Gemisch von Stärke und mindestens einem mit der Stärke chemisch reagierenden Reaktionsmittel bereitet wird und dieses einen Feuchtigkeitsgehalt von mehr als 10 Gew.-% aufweisende Gemisch einer UHF-Bestrahlung ausgesetzt wird, um eine chemische Modifizierung der Stärke herbeizuführen, dadurch gekennzeichnet, daß das Verfahren so durchgeführt wird, daß die Mischung auch nach der Behandlung einen Feuchtigkeitsgehalt von mehr als 10 Gew.-% aufweist und daß die Behandlung mit UHF-Bestrahlung bei einer Temperatur unter 100°C vorgenommen wird.

2. Verfahren nach Anspruch 1, dadurch gekennzeichnet, daß die verwendete Stärke in körniger Form vorliegt und die UHF-Bestrahlung unter Bedingungen durchgeführt wird, die eine Gelatinierung vermeiden.

3. Verfahren nach Anspruch 2, dadurch gekennzeichnet, daß die Stärke einen Ausgangsfeuchtigkeitsgehalt von bis zu 35 Gew.-% hat.

4. Verfahren nach Anspruch 2, dadurch gekennzeichnet, daß die Stärke einen Ausgangsfeuchtigkeitsgehalt von größer als 35 Gew.-% hat.

5. Verfahren nach Anspruch 1, dadurch gekennzeichnet, daß vorgelatinierte Stärke mit einem Ausgangsfeuchtigkeitsgehalt von größer als 35 Gew.-% verwendet wird.

6. Verfahren nach einem der Ansprüche 1 bis 5, dadurch gekennzeichnet, daß die verwendete Stärke Maisstärke ist.

7. Verfahren nach einem der Ansprüche 1 bis 6, dadurch gekennzeichnet, daß das mit der Stärke chemisch reagierende Reaktionsmittel ein ätherbildendes, esterbildendes, hydrolisierendes, vernetzendes, oxydierendes oder dextrinierendes Reaktionsmittel ist.

8. Verfahren nach einem der Ansprüche 1 bis 7, dadurch gekennzeichnet, daß die UHF-Bestrahlung eine Frequenz von ungefähr 2450 MHz hat.

**Revendications**

1. Procédé pour modifier chimiquement l'amidon, qui consiste à prendre un mélange d'amidon et d'au moins un réactif réagissant chimiquement avec l'amidon et à soumettre le mélange ayant une teneur en humidité supérieure à 10 % en poids à un rayonnement à fréquence ultra-haute de manière à effectuer la modification chimique de l'amidon, caractérisé en ce qu'il est mis en oeuvre de manière que le mélange possède même après le traitement une teneur en humidité de plus de 10 % en poids, et en ce que le traitement par rayonnement à ultra-haute fréquence est effectué à des températures inférieures à 100°C.

2. Procédé suivant la revendication 1, dans lequel l'amidon utilisé est de l'amidon sous la forme granulaire et le traitement par rayonnement à ultra-haute fréquence est effectué dans des conditions évitant la gélatinisation.

3. Procédé suivant la revendication 2, dans lequel l'amidon a une teneur initiale en humidité atteignant 35 % en poids.

4. Procédé suivant la revendication 2, dans lequel l'amidon a une teneur initiale en humidité de plus de 35 % en poids.

5. Procédé suivant la revendication 1, dans lequel on utilise de l'amidon prégélatinisé à une teneur initiale en humidité de plus de 35 % en poids.

6. Procédé suivant l'une quelconque des revendications 1 à 5, dans lequel l'amidon utilisé est l'amidon de maïs.

7. Procédé suivant l'une quelconque des revendications 1 à 6, dans lequel le réactif qui réagit chimiquement avec l'amidon est un réactif d'éthérification, d'estérification, d'hydrolyse, de réticulation, d'oxydation ou de dextrinisation.

8. Procédé suivant l'une quelconque des revendications 1 à 7, dans lequel le rayonnement à ultra-haute fréquence a une fréquence d'environ 2450 MHz.

Fig. 1

Fig. 2